# EUROPEAN PATENT SPECIFICATION

(11) **EP 3 047 966 B1**
(45) Date of publication and mention of the grant of the patent: **21.10.2020**
(21) Application number: 16152178.6
(22) Date of filing: 21.01.2016
(51) Int. Cl.: B32B 7/00, B32B 27/00, G09F 3/02, G09F 3/10, B42D 25/00, B41M 3/00

(54) **DECORATED LAMINA OF AN ADHESIVE UNIT AND DECORATION PROCESS OF SAID LAMINA**
DEKORIERTE LAMINA EINER KLEBEFOLIE UND DEKORATIONSVERFAHREN DIESER LAMINA
STRATE DÉCORÉE D'UNE UNITÉ ADHÉSIVE ET PROCÉDÉ DE DÉCORATION DE LADITE STRATE

(30) Priority: 21.01.2015 IT MI20150052
(43) Date of publication of application: 27.07.2016
(73) Proprietor: Somaschini, Giovanni Luca, 26867 Somaglia (LO) (IT)
(72) Inventor: Somaschini, Giovanni Luca, 26867 Somaglia (LO) (IT)
(74) Representative: Lunati & Mazzoni S.r.L.

(56) References cited:
- WO-A1-2007/081915
- DE-U1-202012 011 619
- GB-A- 2 358 608
- US-A- 3 010 861
- US-A- 5 328 738
- US-A1- 2006 249 039
- US-A1- 2013 162 743
- US-B1- 6 475 587

## Description

The present invention relates to a decorated lamina of an adhesive unit and a process of decorating said lamina, of the type specified in the preamble of the independent Claims. Similar devices are disclosed in patent applications US-A-5328738, GB-A-2358608, DE-U-202012011619 and US-A-2013/162743.

In particular, it relates to the decoration of a visible portion of a label or the like.

As is known, adhesive units or labels or stickers are widespread.

These may be of various shapes, sizes, colours, designs and can customize, decorate and liven up walls, panels, doors, windows, shop windows, appliances, vehicle parts, and so on.

The aesthetic appeal of these adhesive units or labels is one of the basic reasons for which they are purchased and applied.

In the prior art already known of the labels have a visible surface which, when it is not uniform or of the type imitating a specific material, is printed or coloured or decorated using any available process, for example by digital printing or by conventional printing, in particular by silkscreen printing.

In various cases a layer of resin is then applied to the sheets to protect the decorations made thereon.

This situation has several drawbacks.

In particular, each printing process has its own specific limitations and thus the decorations are limited in terms of variety and quality. For example, silkscreen printing requires substantial and expensive systems if a large number of colours are involved, because each colour requires its own screen.

In addition, the colours and shades used in silkscreen printing are "flat" and do not offer good shades.

The printing is also not very accurate.

For example, it is not easy to get a good reproduction of photographs, which tend to be of the "posterized" type i.e. with high-contrast, few nuances and simplified lines.

On the other hand, the colours utilisable and available can be chosen at will and in particular striking colours can be achieved. In this sense silkscreen printing is particularly versatile.

Digital printing instead permits high quality images in terms of accuracy, detail and nuance to be produced. Even photographs can be reproduced.

A single machine can then apply all the colours available.

One limitation however of digital printing is the impossibility, even by suitably combining the available colours, of obtaining highly attractive special effects, for example, fluorescent colours cannot be produced, which instead could clearly and pleasant characterise the visible laminas of the labels.

It should also be noted that the protection of the colours and inks applied with a layer of transparent protective resin is negative from many points of view: in terms of costs and the application procedures and in that the resin gives a shiny and vitreous appearance to the lamina it is applied to.

This shiny, vitreous layer makes the label appear not to blend in, showing it to be extraneous to the surfaces it is applied to.

In this situation the technical purpose of the present invention is to devise a decorated lamina of an adhesive unit and process of decoration of said lamina able to substantially overcome the drawbacks mentioned.

Within the sphere of said technical purpose one important aim of the invention is to devise a lamina and a process which allow both precision printing and a wide range of colours and shades, including of the unusual type.

A further object of no less importance is to devise a decorated lamina which has a resin-free, substantially non-vitreous surface, which can blend in smoothly with the surfaces it is applied to.

Said technical purpose and specified aims are achieved by a decorated lamina as claimed in the appended independent Claims.

Preferred embodiments are evident from the dependent claims.

The characteristics and advantages of the invention are clearly evident from the following detailed description of preferred embodiments thereof, with reference to the accompanying drawings, in which:

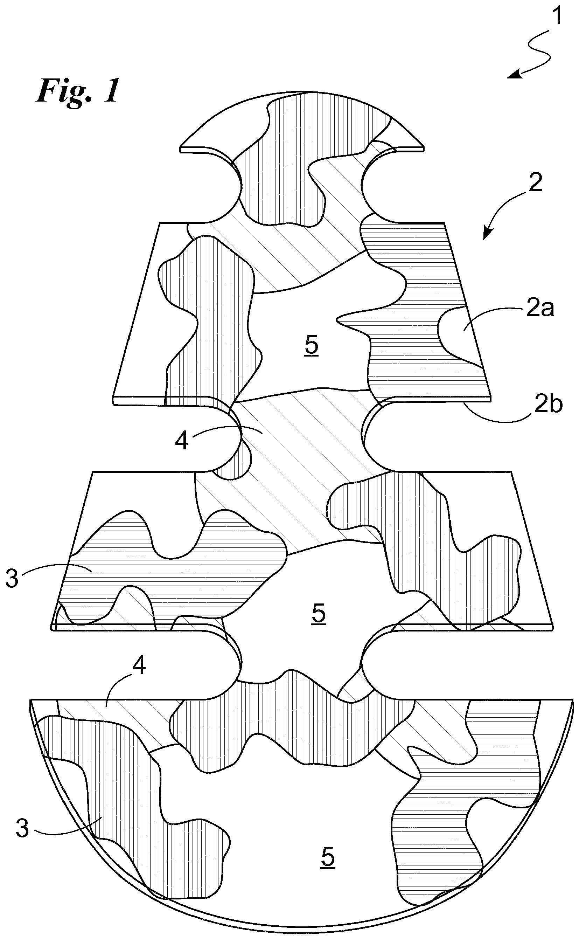

Fig. 1 shows a label with a visible lamina according to the present invention; and

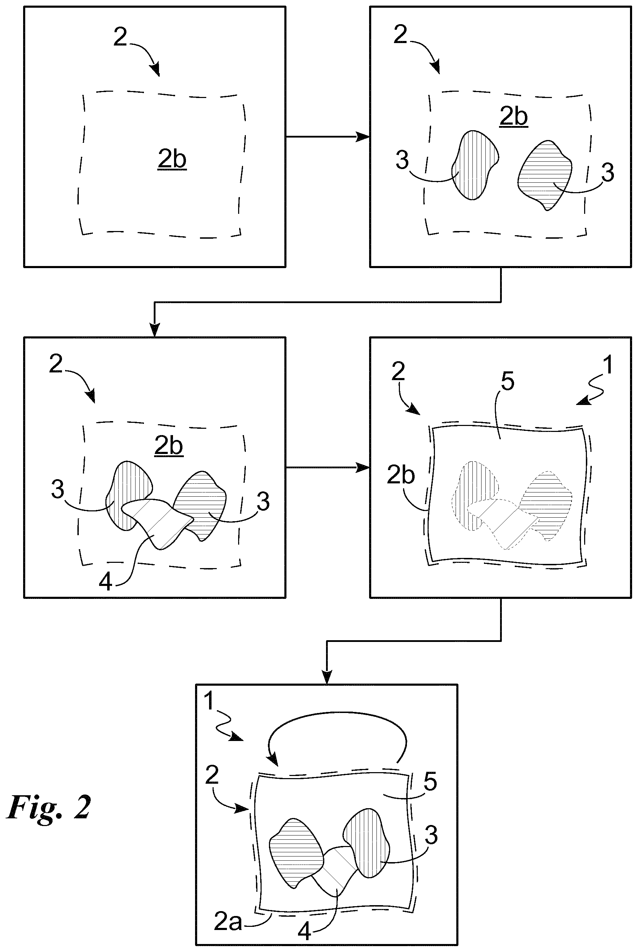

Fig. 2 schematically illustrates the steps of the process according to the invention.

With reference to the Drawings, reference numeral 1 globally denotes the decorated lamina according to the invention.

It shows the upper visible portion of an adhesive unit or label.

The latter may comprise - in addition to the decorated lamina 1 - an adhesive film possibly covered by a removable protection element.

The adhesive film may be part of a more complex bottom layer and in addition other elements may be provided for which add to the physical characteristics of the label.

According to the invention the decorated lamina 1 structurally comprises a transparent sheet **2**, in Polyvinylchloride (PVC), having a thickness to the order of one millimetre or less, for example 0.5 millimetres.

The transparent sheet 2 is preferably not shiny and has an outer face **2a** suitable to define the visible face of the adhesive unit and an inner face **2b** opposite the outer face 2a, and facing the surface to which the label is applied.

Originally at least a first decorated layer **3** is provided for applied only to a portion of the inner face 2b which, therefore, has one or more zones free of the first layer 3, i.e. not decorated by the first layer 3.

The first decorated layer 3 consists of a digital type print or impression i.e. obtained using a digital type machine, utilizing the inks available for such printers, known per se and widespread. For example it is possible to use a digital printer generically known as "inkjet" and operating with inks that are quickly dried and solidified by exposure to UV (ultraviolet) rays.

These digital machines can operate with great precision.

Preferably a plurality of decorated layers combined and suitably structurally different from each other, are arranged, on the inner face 2b. Specifically, said first decorated layer 3 and a second decorated layer **4** structurally different from the first layer 3 are provided for. The second decorated layer 4 is applied to at least part of at least one free zone of the inner face 2b, not engaged by the first layer 3. Optionally, the second decorated layer 4 may be applied on at least part of the first layer 2.

The second layer 4 consists of a print or impression obtained with traditional silkscreen printing of fluorescent ink.

Silkscreen printing is demanding in that for each colour of a design a specific colour must be prepared, and does not have the precision of digital printing, it being very difficult to reproduce nuances and the like, but provides the most varied inks, for example, inks having a fluorescent effect: they become luminescent when they are hit by a light radiation.

These inks, and others with various special effects known per se, such as simulating a gold or silver lamina or opalescent effect, are of great impact and of great interest to buyers.

It may then be provided for that the first layer 3 and second layer 4 are combined and structured so that the first layer 3 - printed first, and with greater accuracy using graphic printers - also defines the graphic motifs and / or design impressed on the inner face 2b, while the second layer 4 - printed afterwards with silkscreen printing - can expand on the first layer, so as to be covered from view by the latter where high-precision printing and a close contiguity of colours is needed.

A further aspect of the decorated lamina 1 according to the invention is the presence of a bottom layer 5 also obtained by printing which covers the two layers 3 and 4 also protecting and covering any remaining free zones on the inner face 2b after the application of the first and second layers 3 and 4.

The bottom layer 5 is preferably a uniform, non-glossy layer for example, white and made as convenient using any printing process known per se, such as digital printing or silkscreen printing.

### NEW PROCESS

The invention also teaches a new process for decorating a lamina 1 defining the upper visible portion of an adhesive label or unit.

The process consists of preparing a transparent sheet 2 having an outer visible face 2a, when the lamina 1 is part of the label, and an inner face 2b opposite the outer and facing the surface to which the label is applied.

It then consists of decorating the lamina 1 by means of printing processes performed on the inner face 2b of said lamina.

A bottom layer 5, also printed and suitable to both cover and protect the printed decorations is then applied over the printed decorations.

In detail, between the inner face 2b and the bottom layer 5 a plurality of decorated layers are arranged comprising at least a first layer 3 made first and a second layer 4 structurally different from the first layer 3 and made afterwards, i.e. after the first layer 3.

The first layer 3 is made by digital printing.

The first layer 3 is applied to only a portion of the inner face 2b of the transparent sheet 2. The inner face 2b has, therefore, areas free of the first layer 3, i.e. not decorated by the first layer 3.

The second layer 4 is made by silkscreen printing using fluorescent ink.

Innovatively, the second layer 4 is applied to at least part of one or more free areas of the inner face 2b. Optionally, the second decorated layer 4 may be applied to at least part of the first layer 2.

The two layers are combined together: the second layer 4 is arranged partly covered from view - when the label is applied - by the first layer 3 made by digital printing and the profiles of the graphic patterns of the decorated lamina 1 are defined by said first layer 3.

In this situation the second layer 4 may be printed freely and without problems of inaccuracy using special inks such as in particular the fluorescent inks, existing in silkscreen printing.

The decorated lamina 1 can then be prepared and treated as indicated in the form of a wide sheet and then cut and shaped to the size of the labels being made.

The invention achieves the proposed objectives and permits important advantages.

In fact a decorated lamina 1 able to highlight the advantages of different decoration processes / techniques is disclosed. For example, the decorated lamina 1 can highlight both the advantages of digital printing and those of silkscreen printing, obtaining labels of great aesthetic value.

Furthermore, this advantage is accentuated by the fact that, since the first layer 3 is applied to only a part of the inner face 2, the second decorated layer 4 is applied to free areas of the inner face 2b and, therefore, is not graphically altered by overlapping with the first layer 3.

It is to be noted how the inventor has also innovatively provided for the possibility of applying the second decorated layer 4 on parts of the inner face 2b decorated with the first layer 2 so as, for example, to obtain particular aesthetic effects and / or conceal portions of the second layer 4.

The decorated lamina 1 may thus be part of labels made in any way, or be directly associated to an adhesive film for direct engagement on any surface.

The fact that the transparent sheet is thin and decorated on the inner face avoids glossy surface or colour effects, even in combination with the bottom layer 5 and makes it unnecessary to apply a layer of transparent resin on the surface. Variations may be made to the invention without departing from the scope of the independent claims.

All details may be replaced with equivalent elements and the materials, shapes and dimensions may be any within the scope of protection defined by the independent claims.

## Claims

1. Decorated lamina (1) of an adhesive unit of the type forming a visible upper portion of an adhesive unit comprising a transparent sheet (2) having an outer face (2a) suitable to define a visible face of said adhesive unit and an inner face (2b) opposite said outer face, comprising a first decorated layer (3) consisting of a digital type print applied to a portion of said inner face (2b) defining at least one area free of said first layer (3) and a second decorated layer (4) structurally different from said first layer (3) and applied to at least part of said at least one area free of said inner face (2b), and **characterized in that** said second decorated layer (4) is obtained by silk screen printing utilising fluorescent ink, and **in that** on said inner face (2b) of said transparent sheet (2) said decorated layers (3, 4) combined with each other are arranged, and wherein a printed bottom layer (5) is provided suitable to cover said decorated layers.

2. Decorated lamina (1) according to one or more of the preceding claims, wherein said first layer (3) consists of a digital print engaging a portion of said inner face (2b) and wherein said second layer (4) is placed on said first layer (3) and on said inner face (2b).

3. Decorated lamina (1) according to one or more of the preceding claims, wherein said second layer (4) consisting of a silk screen print is partially covered from view, when viewed from said visible face, by said first digitally printed layer (3) and wherein the profiles of the graphic patterns of said decorated lamina (2) are defined by said first layer (3).

4. Decorated lamina (1) according to one or more of the preceding claims, wherein said bottom layer (5) is a uniform white printed layer.

5. Decoration process of a visible lamina of an adhesive unit consisting of: preparing a transparent sheet (2) having an outer face (2a) suitable to constitute a visible face of said adhesive unit and an inner face (2b) opposite said outer face (2a); and decorating by means of a first decorated layer (3) made by digital printing applied to a portion of said inner face (2b) defining at least one area free of said first layer (3), and a second decorated layer (4) structurally different from said first layer (3) and applied to at least part of said at least one area free of said inner face (2b), and **characterized in that** said second layer (4) is made by silk screen printing utilising fluorescent ink, a bottom printed layer (5) is provided suitable to cover and protect said decorations and **in that** on said inner face (2b) of said transparent sheet (2) said decorated layers (3, 4) combined with each other are arranged, and wherein a printed bottom layer (5) is provided suitable to cover said decorated layers.

6. Process according to one or more of the preceding claims, wherein said second layer (4) is arranged partially covered from view, when viewed from said visible face, by said first layer (3), the profiles of the graphic patterns of said decorated lamina being defined by said first layer (3).

## Patentansprüche

1. Dekorierte Lamina (1) einer Klebefolie des Typs, der einen sichtbaren oberen Abschnitt einer Klebefolie bildet, umfassend ein durchsichtiges Blatt (2) mit einer Außenseite (2a), das geeignet ist, eine sichtbare Seite der genannten Klebefolie und eine der genannten Außenseite gegenüberliegende Innenseite (2b) zu definieren, umfassend eine von einem Druck digitalen Typs definierte, auf einen ersten Abschnitt der genannten Innenseite (2b) applizierte erste Dekorationsschicht (3), die mindestens einen von der genannten ersten Schicht (3) freien Bereich und eine strukturell von der genannten ersten Schicht (3) verschiedene und auf mindestens einen freien Bereich der genannten Innenseite (2b) applizierte zweite Dekorationsschicht (4) definiert und **dadurch gekennzeichnet, dass** die genannte zweite Dekorationsschicht (4) durch Siebdruck unter Einsatz von fluoreszierender Tinte erzielt wird und dadurch, dass die genannten Dekorationsschichten (3, 4) auf der genannten Innenseite (2b) des genannten durchsichtigen Blattes (2) miteinander kombiniert angeordnet sind und bei der eine bedruckte Bodenschicht (5) vorgesehen ist, die geeignet ist, die genannten Dekorationsschichten abzudecken.

2. Dekorierte Lamina (1) nach einem oder mehreren der vorangegangenen Ansprüche, bei der die genannte erste Schicht (3) von einem Digitaldruck definiert wird, der einen Abschnitt der genannten Innenseite (2b) einnimmt und bei der die genannte zweite Schicht (4) auf der genannten ersten Schicht (3) und auf der genannten Innenseite (2b) angeordnet ist.

3. Dekorierte Lamina (1) nach einem oder mehreren der vorangegangenen Ansprüche, bei der die genannte durch Siebdruck definierte zweite Schicht (4) von dem genannten sichtbaren Abschnitt aus betrachtet durch die von der genannten ersten durch Digitaldruck definierten Schicht (3) teilweise verdeckt ist und bei der die Profile der graphischen Motive der genannten dekorierten Lamina (2) von der genannten ersten Schicht (3) definiert werden.

4. Dekorierte Lamina (1) nach einem oder mehreren der vorangegangenen Ansprüche, bei der die genannten Bodenschicht (5) eine gleichmäßige und weiße Schicht ist.

5. Dekorationsverfahren einer sichtbaren Lamina (1) einer Klebefolie, das in der Vorbereitung eines durchsichtigen Blattes (2) mit einer Außenseite (2a), die geeignet ist, eine sichtbare Seite der genannten Klebefolie und eine der genannten Außenseite (2a) gegenüberliegende Innenseite (2b) zu definieren; dem Dekorieren mit einer von einem Digitaldruck definierten, auf einem ersten Abschnitt der genannten Innenseite (2b) applizierten ersten Dekorationsschicht (3) und einer strukturell von der genannten ersten Schicht (3) verschiedenen und auf mindestens einen freien Bereich der genannten Innenseite (2b) applizierten zweite Dekorationsschicht (4) besteht und **dadurch gekennzeichnet ist, dass** die genannte zweite Dekorationsschicht (4) durch Siebdruck unter Einsatz von fluoreszierender Tinte erzielt wird, eine bedruckte Bodenschicht (5) vorbereitet wird, die geeignet ist, die genannten Dekorationen abzudecken und zu schützen, und dadurch, dass auf der genannten Innenseite (2b) des durchsichtigen Blattes (2) die genannten Dekorationsschichten (3, 4) miteinander kombiniert angeordnet sind und bei dem eine bedruckte Bodenschicht (5) vorgesehen ist, die geeignet ist, die genannten Dekorationsschichten abzudecken.

6. Verfahren nach einem oder mehreren der vorangegangenen Ansprüche, bei dem die genannte zweite Schicht (4) in dem genannten oberen sichtbaren Abschnitt, von dem genannten sichtbaren Abschnitt aus gesehen, teilweise nicht sichtbar ausgelegt ist, wobei die Profile der graphischen Motive der genannten dekorierten Lamina von der genannten ersten Schicht (3) definiert werden.

## Revendications

1. Strate décorée (1) d'une unité adhésive, du type réalisant une partie supérieure en vue d'une unité adhésive, comprenant une feuille transparente (2) ayant une face externe (2a) apte à définir une face en vue de ladite unité adhésive et une face interne (2b) opposée à ladite face externe comprenant une première couche (3) de décoration définie par une impression de type numérique appliquée à une partie de ladite face interne (2b) définissant au moins une zone libre de ladite première couche (3) et une deuxième couche (4) de décoration structurellement différente de ladite première couche (3) et appliquée à au moins une partie de ladite au moins zone libre de ladite face interne (2b), et **caractérisée en ce que** ladite deuxième couche de décoration (4) est obtenue par impression sérigraphique en utilisant une encre fluorescente et **en ce que** sur ladite face interne (2b) lesdites couches de décoration (3, 4) sont disposées combinées entre elles et dans laquelle est prévue une couche de fond (5) imprimée apte à couvrir lesdites couches de décoration.

2. Strate décorée (1) selon l'une ou plusieurs des revendications précédentes, dans laquelle ladite première couche (3) est définie par une impression numérique engageant une partie de ladite face interne (2b) et dans laquelle ladite deuxième couche (4) est prédisposée sur ladite première couche (3) et sur ladite face interne (2b).

3. Strate décorée (1) selon l'une ou plusieurs des revendications précédentes, dans laquelle ladite deuxième couche (4) définie par une impression sérigraphique est partiellement cachée à la vue, lorsque vue de ladite partie visible, par ladite première couche (3) définie par impression numérique et dans laquelle les profils des motifs graphiques de ladite strate décorée (2) sont définis par ladite première couche (3).

4. Strate décorée (1) selon l'une ou plusieurs des revendications précédentes, dans laquelle ladite couche de fond (5) est une couche imprimée uniforme et blanche.

5. Procédé de décoration d'une strate en vue d'une unité adhésive, consistant à prédisposer une feuille transparente (2) ayant une face externe (2a) apte à définir une face en vue de ladite unité adhésive et une face interne (2b) opposée à ladite face externe (2a) ; à décorer par une première couche (3) de décoration réalisée par impression numérique appliquée à une partie de ladite face interne (2b) définissant au moins une zone libre de ladite première couche (3) et une deuxième couche (4) de décoration structurellement différente de ladite première couche (3) et appliquée à au moins une partie de ladite au moins zone libre de ladite face interne (2b), et **caractérisée en ce que** ladite deuxième couche (4) est réalisée par impression sérigraphique en utilisant une encre fluorescente est prédisposée une couche de fond (5) imprimée et apte à couvrir et protéger lesdites décorations et **en ce que** sur ladite face interne (2b) de ladite feuille transparente (2) lesdites couches de décoration (3, 4) sont disposées combinées entre elles et dans laquelle est prévue une couche de fond (5) imprimée apte à couvrir lesdites couches de décoration.

6. Procédé selon l'une ou plusieurs des revendications précédentes, dans lequel ladite deuxième couche (4) est disposée partiellement cachée à la vue, dans ladite partie supérieure visible, lorsque vue de ladite partie visible, lesdits profils des motifs graphiques de ladite strate décorée étant définis par ladite première couche (3).
